# EUROPEAN PATENT APPLICATION

(11) **EP 4 219 089 A1**
(43) Date of publication of application: **02.08.2023**
(21) Application number: 22382075.4
(22) Date of filing: 28.01.2022
(51) Int. Cl.: B25J 11/00, B25J 9/00, B25J 15/04, B21D 28/34, B26D 7/01, B26F 1/02, B26D 5/00, B26D 5/06, B26D 7/08, B26D 5/08, B26F 1/00

(54) **A PUNCHING CELL FOR PUNCHING WORKPIECES**

(71) Applicant: ABB SCHWEIZ AG, 5400 Baden (CH)
(72) Inventor: GRANADERO SABRIDO, Andrés, 08192 Sant Quirze del Vallées (ES); PALLARÉS MARTÍNEZ, Jesús, 08192 Sant Quirze del Vallées (ES); FONT VENTURA, Jordi, 08192 Sant Quirze del Vallées (ES)
(74) Representative: ZBM Patents - Zea, Barlocci & Markvardsen

(57) **Abstract**

The present disclosure relates to a punching cell for punching holes in workpieces, the cell comprising an industrial robot comprising a base, a wrist and at least four robot axes between the base and the wrist; a tooling comprising a frame to be detachably attached/mounted to the wrist axis of the industrial robot, an ultrasonic puncher tool mounted on the frame, a die mounted on the frame and aligned with the puncher, and a servomotor configured to drive the puncher tool towards the die; the cell further comprising a support fixture to position the workpiece to be punched, and a control unit to control the operation of the industrial robot to punch a hole in the workpiece.

## Description

The present disclosure relates to a punching cell for punching holes in workpieces, the cell comprising an industrial robot and a support fixture for a workpiece.

### BACKGROUND

It is known to use custom designed punching cells for punching holes in workpieces such as vehicle bumpers, for example in a manufacturing line, such as a line employed for manufacturing vehicle body parts.

Holes may be punched in a vehicle bumper, for example, for housing the sensors associated with an automated parking system and may require a high degree of accuracy in their position and orientation.

Known punching cells are generally large and custom designed for a specific vehicle bumper model. The cell may comprise several punchers, and hydraulic systems to drive each puncher to form a hole in a specific and accurate position and orientation of the vehicle bumper. Even though they allow workpieces to be processed at a high rate, the cell has a high manufacturing cost, complexity, and weight. Furthermore, each punching cell is configured for a specific bumper model, or sometimes for a few bumper models, so every new bumper configuration requires a new punching cell, or an existing punching cell has to be redesigned. Moreover, since several bumpers of a certain model may be needed, e.g., as spare parts, even after no new vehicles are fitted with that bumper model, known cells often need to be stored for years and used only sporadically, thus taking up space and requiring a relevant investment.

The present disclosure aims at solving the problem of punching holes in workpieces such as vehicle bumpers in a reliable and accurate way, with a cost effective and flexible system which may be readily adapted to different designs of the workpiece to be punched, e.g. to different models of vehicle bumpers, in which the position and/or inclination of the holes to be punched may vary from one workpiece to another, and therefore avoiding the need to provide different custom cells for different workpieces.

### SUMMARY

In a first aspect, a punching cell for punching holes in workpieces is provided. The punching cell may comprise an industrial robot comprising a base, a wrist and at least four robot axes between the base and the wrist; and a tooling comprising: a frame to be detachably attached/mounted to the wrist axis of the industrial robot; an ultrasonic puncher tool mounted on the frame; a die mounted on the frame and aligned with the puncher; a servomotor configured to drive the puncher tool towards the die; a support fixture to position the workpiece to be punched; and a control unit to control the operation of the industrial robot to punch a hole in the workpiece.

Such a punching cell, wherein an industrial robot is used in combination with a tooling comprising an ultrasonic puncher tool, allows punching holes in workpieces such as, for example, vehicle bumpers, in an accurate way, and may be readily adapted to workpieces of different design and configuration by virtue of the industrial robot's programming potential: the robot is able to place the puncher tool in different positions and orientations, depending on the design of the workpiece and the hole or holes to be formed.

Furthermore, the robot may be fitted with different detachable toolings, for example with different types of puncher tools and dies for different sizes and shapes of holes or openings to be formed, or e.g., for different workpiece materials or thicknesses, in a flexible way.

In order to punch holes in each different workpiece, different parameters have to be taken into account, such as parameters regarding the material of the workpiece, the type of paint coating on the workpiece, the geometry of the workpiece and the specific place of the hole to be punched therein.

More specifically, the inclination of the puncher tool regarding the surface of the workpiece is important since it defines the shape of the hole. If, for example, a puncher tool having a cylinder-shaped tip punches a hole in a workpiece with a flat surface in a perpendicular manner, the resulting hole would be a circular-shaped hole. On the other hand, if the same puncher tool punches the hole obliquely, i.e., at an angle different from 90° with respect to the flat surface of the workpiece, the resulting hole would be an ellipse.

Therefore, the shape of the surface of the workpiece and the shape of the desired hole have to be considered when designing the shape of a puncher tool (and, usually, its tip), the angle at which it will punch the surface of the workpiece, and the position of the hole within the overall workpiece.

An ultrasonic puncher may vibrate between 10KHz-70KHz, and it may penetrate the workpiece material (which may usually be, in the case of vehicle bumpers, a plastic material), without the need of applying high pressure on the tool. This results in low deformation of the workpiece material, thus avoiding cracks or weak spots around the hole. Furthermore, a precise, uniform, and clean finish of the resulting punched hole is achieved, lessening the burrs surrounding it. Additionally, by using an ultrasonic puncher, different types of rounded edges may be achieved on the resulting hole, thus adapting the holes to house different devices, or simplifying the insertion thereof in the hole. Such devices may be e.g., vehicle lights, sensors, such as parking sensors, or other.

Alternatively, according to examples, other type of punchers may be used such as punchers without ultrasonic equipment. However, such punchers may need a high amount of driving force when punching a workpiece, thus resulting in an equipment bigger than ultrasonic driven punchers, to achieve a similar result.

Also, by providing, in the cell, several interchangeable toolings, for example each tooling having a puncher tool for a certain size or type of hole, the robot may process a workpiece having different types of holes by using a first tooling to punch a first hole, and successively releasing the first tooling and fetching a second tooling to punch a second hole, different from the first hole. The toolings required for a particular workpiece may be releasably mounted in the cell, within the reach of the robot, and may be provided with a quick tool changer, such that the replacement of one tooling with another may be performed by the robot, and any down time for manual intervention in the replacement of the toolings may be avoided.

Also, the control unit may further control the positioning of the workpiece on the fixture.

For example, the control unit may receive a control signal from presence sensors comprised in the support fixture, thus monitoring the correct positioning of a workpiece on the fixture. Once the workpiece is correctly positioned on the support fixture, the control signal may indicate the control unit to go ahead with the punching operation of the industrial robot.

In examples, the support fixture may comprise a plurality of presence sensors such as inductive sensors, capacitive sensors, optic sensors, mechanical sensors, or a combination thereof. The sensors may be connected to a PLC unit, which in turn may be connected to the control unit. Therefore, when in use, an operator may place a workpiece on the support fixture, and the sensors may monitor a correct positioning of the workpiece by means of the presence sensors. When a correct positioning of the workpiece has been performed, the presence sensors may send a control signal to the PLC indicating such correct positioning. Then, the PLC may further send a control signal to the control unit indicating to proceed with the punching operation of the industrial robot.

Other implementations of the controlling of the positioning of the workpiece may be implemented, using alternative configurations with or without the use of a PLC unit.

Furthermore, the frame of the tooling may be c-shaped, which allows more flexibility to position the puncher tool and the die in different relative positions with respect to the workpiece.

In some examples, the servomotor may drive the puncher tool towards the die, to punch the workpiece, through a linear actuator that converts rotary motion into linear motion. Mechanical Actuators are the simplest form of linear actuators which convert rotary motion into linear motion. Some examples of mechanical linear actuators may be Ball screw actuators, leadscrew actuators, rack and pinion actuators, belt driven actuators, or cam actuators. The operation of such actuators may involve a screw, known as a lead screw, creating motion by turning clockwise or counter clockwise, causing a lead nut on the screw to move, thus creating a linear motion. The use of such mechanical actuators may be a structurally simple solution, while enhancing the precision of the punching operation.

According to another example, the linear actuator may comprise a ball screw actuator. This way, especially when the puncher tool extends in a horizontal or inclined direction, the direction of advance of the puncher tool while punching the hole may be accurately controlled, without e.g., a deviation caused by the weight of the tooling or the puncher itself.

Alternatively, in some cases, a rack and pinion actuator may be used to drive the puncher tool towards the die, the rack being attached to the puncher tool, and the pinion being driven by the servomotor.

According to an example, the servomotor may be an electric motor servomotor, outputting a rotational movement to move the linear actuator. Also, the servomotor may alternatively be a hydraulic actuator instead of an electric motor. However, hydraulic actuators may be a bigger solution that electric motors, to achieve same result as electric motors.

### BRIEF DESCRIPTION OF THE DRAWINGS

Non-limiting examples of the present disclosure will be described in the following, with reference to the appended drawings, in which:
Figure 1A is a schematic diagram of a punching cell according to examples disclosed herein.
Figure 1B is a schematic diagram of an alternative punching cell according to examples disclosed herein.
Figure 2 is a perspective view of an example industrial robot and support fixture according to the present disclosure.
Figures 2B and 2C show an example of a tooling storage, according to the present disclosure.
Figure 3A and 3B show an example of a tooling according to the present disclosure.
Figures 4 and 5 show flowcharts of examples of a method for punching holes on a workpiece according to the present disclosure.

### DETAILED DESCRIPTION OF EXAMPLES

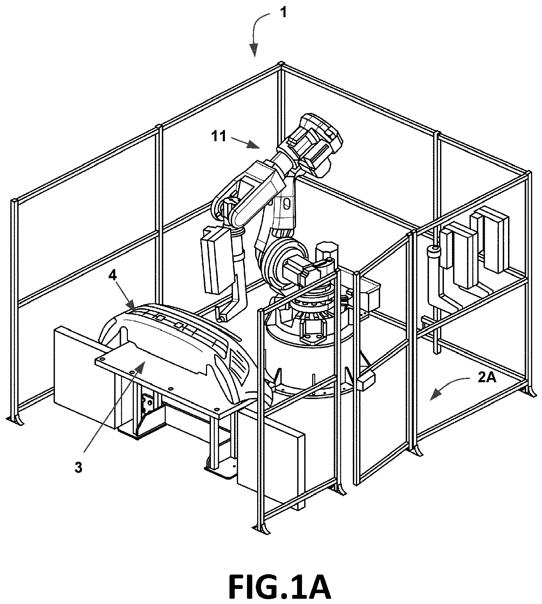

Figure 1A shows in perspective view a punching cell 1 according to an example. The punching cell 1 in Figure 1A comprises an industrial robot 11, for example in a working area 2A of the cell; a support fixture 3 to hold workpieces 4 in a predetermined position, to be punched by the industrial robot. The punching robot 11 may be an industrial robot, for example a robot comprising at least four axes between a robot base and a robot wrist. A suitable commercial robot may be for example model known as IRB 6620, available from ABB LTD (Zurich).

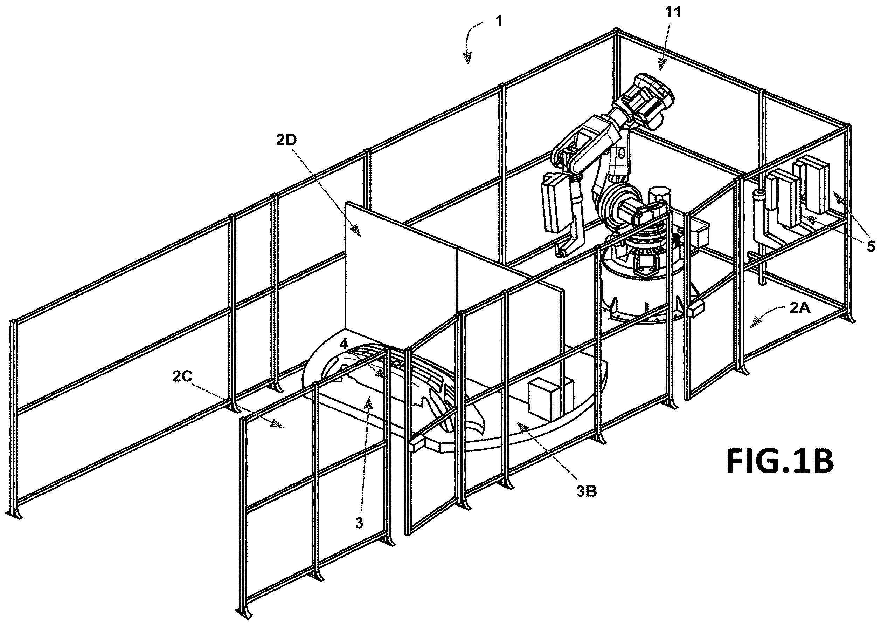

According to some examples, as seen in figure 1B, the support fixture 3 may be mounted on a rotatable platform 3B, in such a way that a a protective screen 2D may divide the space in front of the industrial robot between the working area 2A and an operator area 2C, for an operator to put the workpiece on the support fixture 3 on top of the rotatable platform 3B. The screen 2D may function as a separation between the area where the operator is putting the workpiece on the support fixture 3 or picking up a workpiece already punched from therein (i.e., the operator area 2C), and the working area 2A wherein the robot operates to punch workpieces found on the support fixture 3. This way, a workpiece can be safely put on the fixture on top of the platform by an operator, rotated 180°, punched by the industrial robot and rotated back again when the operation is finished, so the operator can pick the finished workpiece in a safe manner.

Furthermore, as seen in both figures 1A and 1B, the cell may also comprise a tooling storage 5. Such tooling storage may hold a plurality of toolings to be used in punching operations by the robot. Each tooling may be fixed to the tooling storage 5 by means of a supporting structure, which may comprise holding means, such as pneumatic, mechanical, or vacuum systems. For example, some toolings may be hold by hooks which comprise a pneumatic system to adjust and securely grasp a tooling within the tooling storage. Alternatively, other toolings may be hold by suction pads, which may grasp the tooling by means of a vacuum circuit formed within the pad. Other types of holding means may be used within the tooling storage depending on the configuration of the cell and the number of toolings needed for a specific operation (for example, a specific workpiece may need more or less toolings, thus determining the type of holding means to be used on the tooling storage 5, depending on the space needed to store said number of toolings). In the examples of figures 1A and 1B, two toolings are hanging from a hook fixed to the outer structure of the cell.

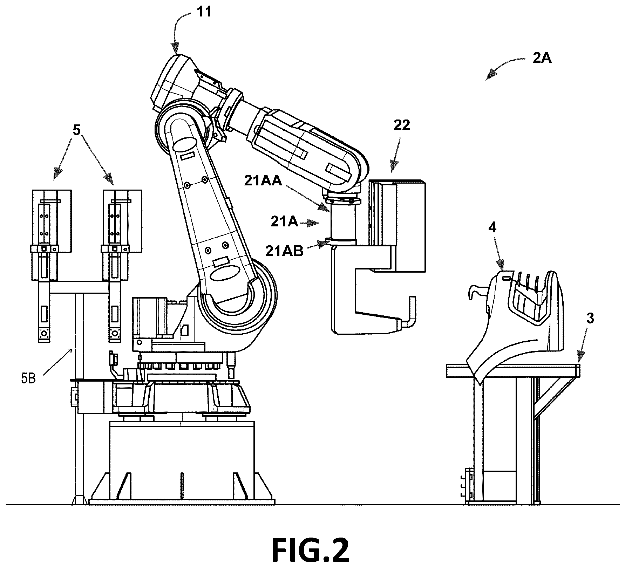

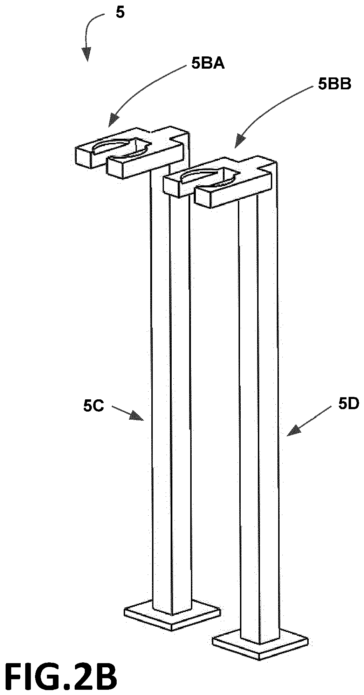

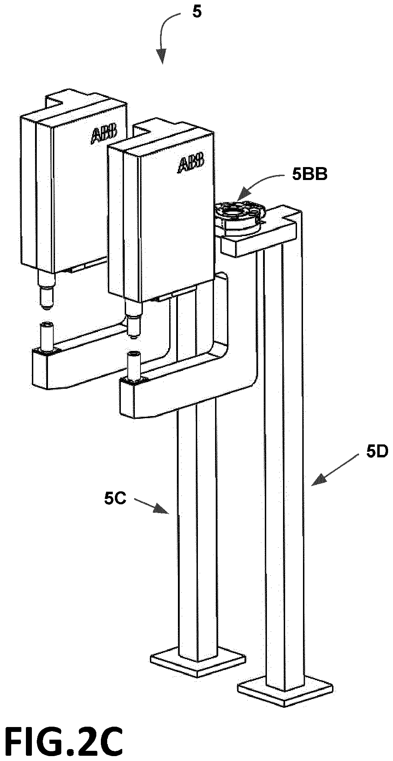

On the other hand, figure 2 shows an alternative example of a tooling storage 5, wherein the two toolings are hanging from a tooling pillar 5B, fixed to the floor. Another example of an alternative embodiment of a tooling storage 5 may be found in figure 2B and figure 2C, wherein a detailed view of two exemplary supporting pillars 5C and 5D is shown. More specifically, figure 2B shows the pillars 5C and 5D on their own, showing a locking mechanism each 5BA and 5BB at on end of the corresponding pillars 5C and 5D. Such mechanisms are configured to hold and lock a tooling each. Figure 2C shows pillars 5C and 5D supporting a tooling each, wherein the corresponding locking mechanisms are supporting a corresponding tooling.

Figure 2 shows a view in more detail of part of the working area 2A, wherein the industrial robot 11 and support fixture 3 are shown. A tooling 22 is attached to the industrial robot 11 by means of a tool changer 21A.

The tool changer 21A may be formed by a coupling element 21AA attached to the wrist of the robot 21B, and a matching tool coupling element 21AB attached to a tooling 22. A tool changer, also known as a quick-change device, may be a coupling device with two cooperating and mating parts, usually referred to as master plate and tool plate, which are designed to lock or couple together, either manually or automatically, and can pass from one side to the other utilities such as electric or pneumatic signals, and/or other. They may also be designed to carry a payload. The master plate is usually attached to the wrist axis of the robot and carries a locking mechanism, for example mechanical or pneumatic, and the tool plate is attached to the tooling and carries suitable elements to be engaged by the locking mechanism of the master plate. A tool changer 21A employed in examples of the present disclosure may be of any known type, for example it may be an automatic tool changer that uses a pneumatic system to lock the two parts together (in this case, the coupling element 21AA and the tool coupling element 21AB).

A support fixture 3 is also mounted in the working area 2A, to support a workpiece 4 to be punched by the puncher tool of the tooling that is held and operated by the robot 11. In examples, the workpiece may be a vehicle bumper, in which a number of holes need to be punched, in predetermined positions and with predetermined specifications (e.g., diameter, orientation, etc.) in order to house e.g. parking sensors for the front of a vehicle. As shown, the robot 11 is within reach of the support fixture 3 and in a predetermined position with respect to the support fixture, such that the robot can reach parts of the workpiece 4 to punch one or more holes in it, following pre-programmed instructions. This way, the robot can, based on the model of the workpiece 4 (for example, a certain model of vehicle bumper), punch holes in predetermined locations of the workpiece.

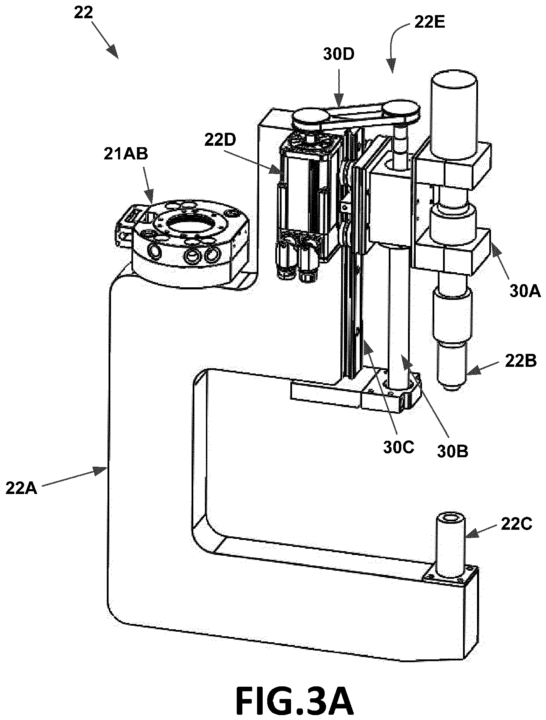

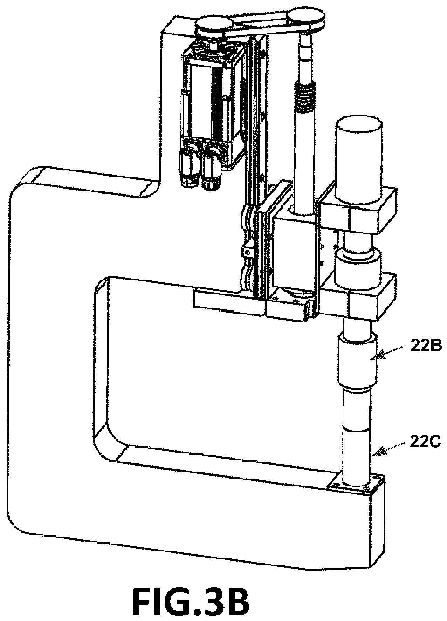

Figures 3A and 3B show a detailed depiction of the tooling 22 of the industrial robot 11, in two different operating positions respectively. In figures 1A, 1B and 2, the mechanical elements of the tooling 22 are partially covered by a protective box. However, in figures 3A and 3B, the tooling 22 is shown without the protective box.

More precisely, as seen in figure 3A, the tooling 22 may comprise a C-shaped frame 22A. Furthermore, a punching system may be mounted on the frame 22A. More specifically, in this example, the punching system may comprise a motor 22D mounted on frame 22A, such as a servomotor; a linear actuator 22E connected to the motor, to convert the rotary motion of the motor into a linear displacement; and a puncher tool 22B driven by the linear actuator 22E.

In examples, the linear actuator 22E may be a mechanical linear actuator comprising a shaft and a nut with matching threads, wherein the nut travels along the shaft when the shaft rotates, or conversely, the shaft is displaced axially when the nut rotates.

For example, the linear actuator may be a ball screw drive comprising a screw shaft and a ball nut, which may provide very good accuracy in the movement and positioning.

In examples, the puncher tool may be attached to the ball nut, with its axis parallel to the screw shaft, and the displacement of the nut therefore may drive the puncher tool in axial direction: for example the puncher tool may be moved in a vertical direction, if the robot is holding the tooling in a position in which the screw shaft and the puncher tool axis are vertical, so as to punch a hole vertically in the workpiece, as illustrated in Figure 2. For punching a hole in a different direction, e.g., horizontal or inclined, the robot may hold the tooling in an orientation in which the screw shaft and the puncher tool axis are horizontal or inclined.

In other examples the linear actuator may be a lead screw drive, a pinion and rack system, or others.

In the example of figure 3A, the c-shaped frame 31 further comprises a tool coupling element 21AB, to attach the tooling 22 to the wrist of the robot, by means of the previously described tool changer 21A.

Furthermore, as seen in figure 3A, a corresponding puncher die 22C is also mounted on the frame 22A, in such a way that it is aligned with the axis of the puncher tool 22B, and it allows punching the holes in a precise manner.

In the example of figure 3A, the linear actuator is a ball screw actuator 22E, comprising a slider support 30A, a puncher tool 22B mounted on the slider support 30A, and a die 22C mounted on the C-shaped frame 22A, such that the tool 22B and the die 22C are aligned in order to punch a piece by driving the movable puncher 22B towards the fix die 22C. Furthermore, the ball screw actuator 22E comprises a screw shaft 30B, wherein the slider support 30A is coupled to the screw shaft 30B and to a supporting guide 30C.

Supporting guide 30C may be used a supplementary support for the ball screw actuator 22E, to provide additional security and fixation to the slider support 30A when moving along the screw shaft 30B, ensuring that the movement is as parallel as possible to the screw shaft 30B. Alternatively, a guided cylinder may also be used instead of a supporting guide 30C, although it may need higher maintenance than the guide 30C (i.e. more lubrication than a guide, with repeated movement)

Also, the servomotor 22D is coupled to the screw shaft 30B through a transmission line 30D, which enables to rotate the screw shaft 30B by operating the servomotor 22D. Upon rotation of the screw shaft 30B, the mechanical gear found within the ball screw actuator 22E, drives the slider support 30A along the screw shaft 30B, translating the rotation of the screw shaft 30B into a linear movement of the slider support 30A. This way, the puncher tool 22B (mounted on the slider support 30A) may be linearly displaced towards or away from the die 22C upon operation of the servomotor 22D, in order to punch a hole in a workpiece found in between the tool 22B and the die 22C.

Thus, in figure 3A, the tool 22B and the die 22C are positioned in a passive position, such that a workpiece can be placed in between them in order to punch a hole. On the other hand, in figure 3B, the tool 22B and the die 22C are displaced and in a punching position, such that when a workpiece is previously placed in between them, a hole is punched in the workpiece by means of the tool 22B approaching to the die 22C and perforating the material of the workpiece.

Furthermore, the tooling may also comprise a calibration system to align the puncher die with the puncher. For example, the puncher die may be fixed to the frame with a plurality of screws. The holes on the puncher piece used to screw it to the frame may be bigger than the actual screw, so they allow room for adjusting the puncher die in order to align the die with the puncher in a more precise way.

A ball screw actuator is a mechanical gear that converts the rotary motion of the servomotor 33 drive shaft into the linear displacement of the slider support 32D along, in this case, the axis of the screw shaft 32C. Generally, a ball screw actuator 4 comprises a ball case, and within the case it comprises a nut configured to be driven by the screw shaft 32C, the nut and the screw shaft 32C having matching helical grooves, the ball screw actuator further comprising a plurality of balls 44 connected to each other which roll between said grooves providing the only contact between the nut and the worm screw 32C. Thus, as the worm screw 32C rotates, the balls are deflected by a deflector into a ball return system of the nut, travelling through it to the opposite end of the nut in a continuous path. The balls then exit from the ball return system into the ball screw actuator and nut thread raceways in a continuous manner, to recirculate in a closed circuit within the ball screw actuator.

In this case, the ball case of the ball screw actuator is attached to the slider support 32D. Therefore, upon rotation of the servomotor's drive shaft, the nut of the ball screw actuator initiates the rotary motion, and the balls start moving along the thread of the nut, performing the translational motion of the ball case along the screw shaft 32C, moving the slider support and the puncher tool 32A to or away from the die 32B as a result.

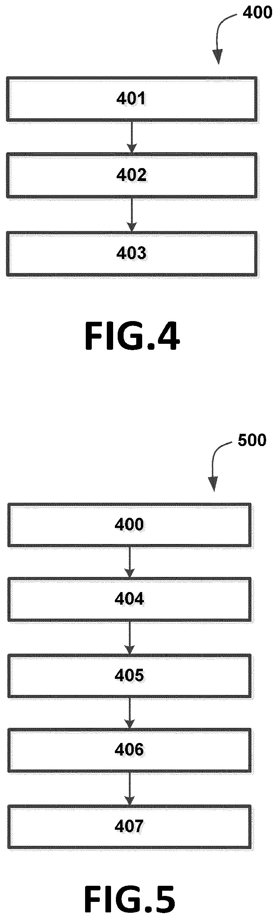

Figure 4 shows a flowchart of an example of a method for punching holes on a workpiece. Such example may be performed using any of the previously described exemplary embodiments of a punching cell for punching holes in workpieces. More precisely, Figure 4 shows an example of a method for punching holes 400 comprising:
- Step 401 of placing a workpiece in a predetermined position on a support fixture;
- Step 402 of operating an industrial robot to position a tooling comprising a puncher tool, according to a predetermined punching pattern with respect to the support fixture; and
- Step 403 of operating the puncher tool of the tooling to drive the puncher tool to punch at least one hole on the workpiece following the predetermined punching pattern.

Furthermore, according to another example, Figure 5 shows a flowchart of another example of a method for punching holes on a workpiece. More precisely, Figure 5 shows a method for punching holes 500 comprising the previously described steps of method 400 and, additionally:
- Step 404 of operating the industrial robot to place the punching tooling on a tooling storage, and to detach the tooling from the industrial robot;
- Step 405 of operating the industrial robot to attach a second punching tooling, the second punching tooling being placed on the tooling storage;

- Step 406 of operating the industrial robot to place the second punching tooling according to a second predetermined punching pattern with respect of the support fixture; and
- Step 407 of operating a server-motor of the second punching tooling to drive a puncher tool to punch at least one hole on the workpiece.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A punching cell for punching holes in workpieces, comprising:
• an industrial robot comprising a base, a wrist and at least four robot axes between the base and the wrist,
• a tooling comprising:
- a frame to be detachably attached/mounted to the wrist axis of the industrial robot;
- an ultrasonic puncher tool mounted on the frame;
- a die mounted on the frame and aligned with the puncher;
- a servomotor configured to drive the puncher tool towards the die;
• a support fixture to position the workpiece to be punched;
• a control unit to control the operation of the industrial robot to punch a hole in the workpiece.

2. A punching cell according to claim 1, wherein the control unit further controls the positioning of the workpiece on the fixture.

3. A punching cell according to claim 1 or 2, wherein the frame of the tooling is C-shaped.

4. A punching cell according to any of claims 1 to 3, wherein the support fixture comprises at least one clamp to fix the workpiece into work position.

5. A punching cell according to any of claims 1 to 4, wherein the tooling further comprises a linear actuator connected to the servomotor, to move the puncher tool towards the die.

6. A punching cell according to claim 5, wherein the linear actuator comprises a ball screw actuator.

7. A punching cell according to any of claims 1 to 6, further comprising a tool changer mounted on the wrist axis of the robot, and a complementary tool changer provided on the frame of the tooling.

8. A punching cell according to any of claims 1 to 7, wherein the support fixture further comprises positioning sensors to detect a predetermined position of the workpiece on the fixture.

9. A punching cell according to any of claims 1 to 8, wherein the ultrasonic puncher tool comprises a sonotrode.

10. A punching cell according to any of claims 1 to 8, further comprising a tooling storage for storing detachable puncher toolings within the reach of the robot.

11. A punching cell according to any of claims 1 to 10, further comprising a transporting platform, wherein the industrial robot and the support fixture are mounted on top of the platform.

12. A punching cell according to claim 11, wherein the transporting platform comprises openings engageable by a forklift.

13. A punching cell according to any of claims 1 to 12, further comprising a rotatable base comprising a screen dividing the base in at least two working areas, wherein the support fixture is mounted on one of the working areas.

14. A punching method for punching holes in workpieces, comprising:
• placing a workpiece in a predetermined position on a support fixture;
• operating an industrial robot to position a tooling comprising a puncher tool, according to a predetermined punching pattern with respect to the support fixture; and
• operating the puncher tool of the tooling to drive the puncher tool to punch at least one hole on the workpiece following the predetermined punching pattern.

15. A punching method for punching holes according to claim 14, further comprising:
• operating the industrial robot to place the punching tooling on a tooling storage, and to detach the tooling from the industrial robot;
• operating the industrial robot to attach a second punching tooling, the second punching tooling being placed on the tooling storage;
• operating the industrial robot to place the second punching tooling according to a second predetermined punching pattern with respect of the support fixture; and
• operating a server-motor of the second punching tooling to drive a puncher tool to punch at least one hole on the workpiece.
